# EUROPEAN PATENT SPECIFICATION

(11) **EP 1 116 284 B1**
(45) Date of publication and mention of the grant of the patent: **03.10.2007**
(21) Application number: 99943617.3
(22) Date of filing: 23.07.1999
(51) Int. Cl.: H01M 2/10, H01M 2/02, H01M 2/06

(54) **BATTERY CARD ASSEMBLY FOR ELECTRICAL APPARATUSES**
BATTERIEKARTEN-ANORDNUNG FÜR ELEKTROGERÄTE
ASSEMBLAGE À CARTES DE BATTERIE POUR APPAREILS ÉLECTRIQUES

(43) Date of publication of application: 18.07.2001
(73) Proprietor: Chaing, Cyril C. K., Taipei (CN); Rei, Min Hon, Seattle, WA 98115 (US)
(72) Inventor: Chaing, Cyril C. K., Taipei (CN); Rei, Min Hon, Seattle, WA 98115 (US)
(74) Representative: Roos, Peter
(86) International application number: PCT/US1999/016657
(87) International publication number: WO 2001/006580

(56) References cited:
- EP-A- 0 679 002
- US-A- 4 092 464
- US-A- 4 105 815
- US-A- 5 075 182
- US-A- 5 124 508
- US-A- 5 567 543
- US-A- 5 824 431
- PATENT ABSTRACTS OF JAPAN vol. 0173, no. 54 (P-1567), 5 July 1993 (1993-07-05) & JP 5 046820 A (SHARP CORP), 26 February 1993 (1993-02-26)
- PATENT ABSTRACTS OF JAPAN vol. 0120, no. 69 (E-587), 3 March 1988 (1988-03-03) & JP 62 211857 A (MATSUSHITA ELECTRIC IND CO LTD), 17 September 1987 (1987-09-17)
- PATENT ABSTRACTS OF JAPAN vol. 0130, no. 62 (E-715), 13 February 1989 (1989-02-13) & JP 63 250050 A (TOSHIBA BATTERY CO LTD), 17 October 1988 (1988-10-17)

## Description

### FIELD OF THE INVENTION

The present invention relates to a battery pack and an electrical apparatus using the battery pack, and more particularly to a battery card assembly and an electrical apparatus using same battery card assembly.

### BACKGROUND OF THE INVENTION

At the present time, all portable electrical apparatus including portable information appliances use internal battery pack for energy source. Battery pack contains several battery cells in series and/or in parallel arrangement, making the desired capacity and voltage to operate the appliance.

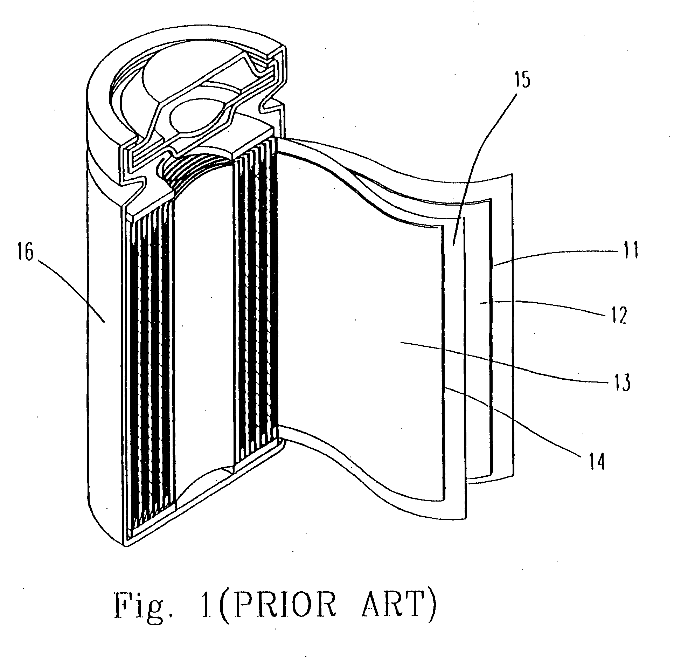

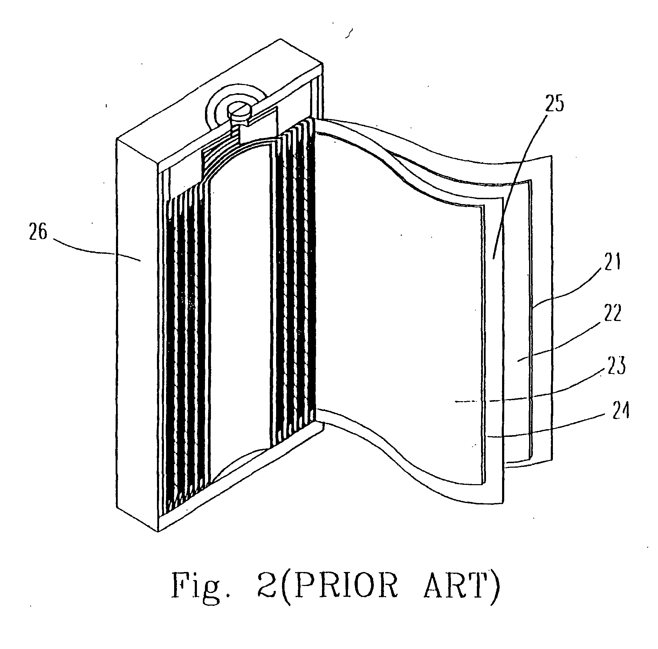

Battery cells in battery pack for portable information appliances are of two major categories, i.e., nickel metal hydride (NiMH) and lithium ion (Li-ion), because of their relatively high energy density. Conventional battery cells are configured in cylindrical and/or prismatic structures. Fig. 1 shows a cross-section view of a conventional battery cell in a cylindrical structure. As shown in Fig. 1, attaching media 11 with anode layer 12 and attaching media 13 with cathode layer 14 dissociated by a separator 15 are winded in a cylindrical can 16, making the most popular battery cell in cylindrical structure. Fig 2 shows a cross-section view of a conventional battery cell in prismatic structure. As shown in Fig. 2, attaching media 21 with anode layer 22 and attaching media 23 with cathode layer 24 dissociated by a separator 25 are winded in a prismatic can 26, making rectangular battery cell for special applications.

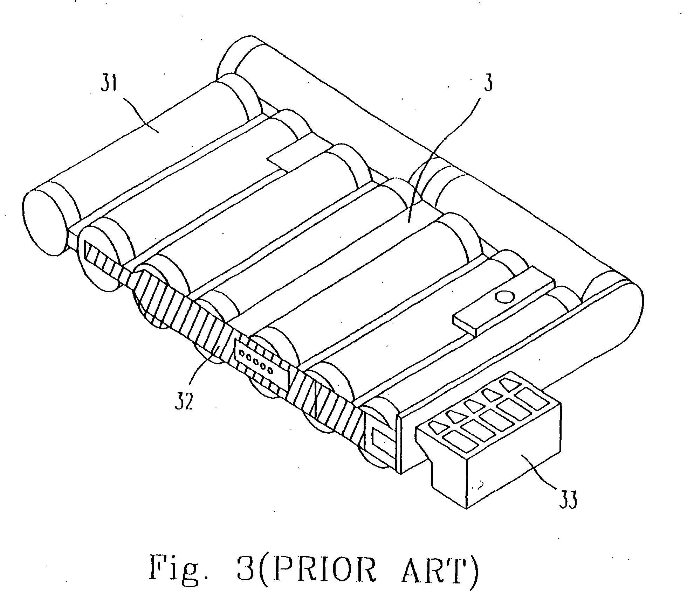

Generally speaking, battery pack structures are determined by battery cell configurations. Conventional battery packs are bulky, heavy, and expensive when multiple battery cells are integrated. Fig. 3 shows an industry standard battery pack for notebook computers. The battery pack 3 contains several cylindrical Li-ion battery cells 31, with a circuitry board 32 embedded to gauge fuel and to monitor voltage/current when charging and discharging. In addition, the battery pack 3 has a five-pin output jack 33 connected to the notebook computer. Two of them are terminals for power transmission, the "+" and the "-". Others are reserved for communication between battery pack 3 and computer (not shown) for battery cell temperature, battery cell data code, and voltage/current status of the battery pack. In Fig. 3 there are nine cylindrical battery cells 31 arranged in the battery pack 3, three in series and three in parallel. Each battery cell 31 sizes 18mm in diameter, 65mm in height, operating at 3.6V with a full capacity of 1.35Ah. The battery pack 3 consisting of nine cylindrical battery cells 31 delivers 44Wh (10.8V x 4.05Ah) with 150(W) x 90(L) x 2 1 (T) mm in size and 490 grams in weight. Such a battery pack 3 is able to operate a Pentium 300 notebook computer for approximately 3 hours (180 minutes).

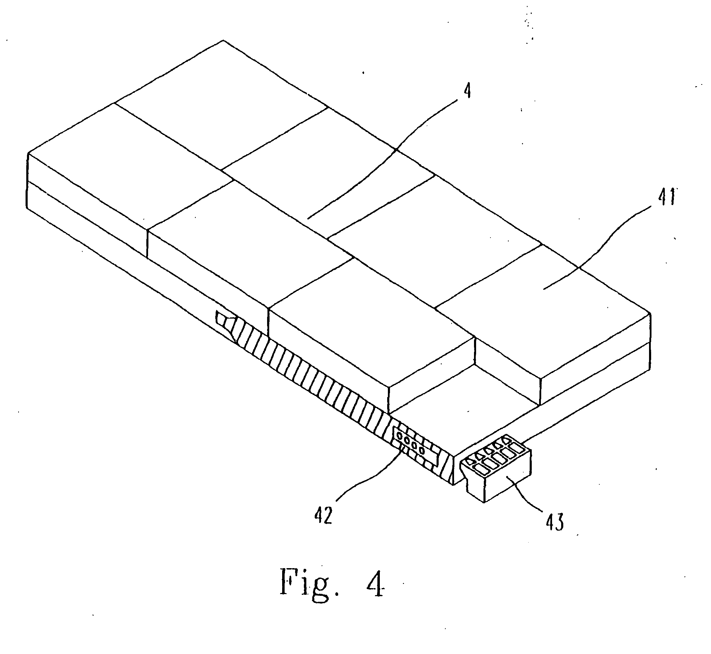

Lately battery packs are designed as thin and light as possible in an attempt to fit slimmer and more compact appliances. Fig. 4 shows a slim battery pack for notebook computers containing prismatic battery cells. As shown in Fig 4, the battery pack 4 contains several prismatic Li-ion battery cells 41, with a circuitry board 42 embedded to gauge fuel and to monitor voltage/current when charging and discharging. In addition, the battery pack 4 has a five-pin output jack 43 connected to notebook computer. Two of them are terminals for power transmission, the "+" and the "-". Others are reserved for communication between battery pack 4 and computer (not shown) for battery cell temperature, battery cell data code, and voltage/current status of the battery pack.

Compared to the battery pack 3 of Fig. 3, the battery pack 4 of Fig. 4 has a reduced dimension in thickness because of using prismatic battery cells 41, normally less than 10mm. However, battery run time is compromised because less conducting materials are used in smaller battery cells. Users have found difficulty in maintaining power continuity. With more frequent power shortage, data integrity becomes vulnerable in some worst scenarios.

In general, notebook computers incorporate only one battery pack. For heavy users, however, there are notebook computers mounted with two battery packs. They are not considered practical as weight and inconvenience are in concern.

In addition, all battery packs are not interchangeable with each other because of the design limitation so that customers cannot replace the battery pack unless from original device maker. Users are confined by inflexible battery pack form factor. Appliance manufacturers, as a result, are able to control battery accessory market at hefty prices with limited availability.

Specifically designed battery packs usually present specific safety concerns when inadvertently used outside the manufacturer's recommended guidelines. Recently, in-seat power supply system on aircraft has drawn public attention because users rarely detect battery health before they charge their battery in flight. Manufacturers have recommended Federal Aviation Administration (FAA) to place a moratorium on the use until safety issues can be resolved.

US 5075182 focuses on a battery handler. The battery handler, attached to the battery, is used to simplify and tactilely aid the installation of the battery and it preferably has a key feature that assuring the proper battery is correctly installed in the battery holder. The optional battery indicator provides a means of visually verifying that a working battery is properly inserted into the battery holder and that the battery holder is properly connected to the electrical apparatus.

In addition, JP 05046820 relates to the continuous power supply from two batteries, wherein one of the two batteries is mounted inside the device and the other one is mounted outside the device.

In addition, JP 62211857 focuses on the problem of preventing the coming out of a battery when battery terminals are inserted into holes of a printed circuit board.

Furthermore, in order to prevent the external short circuiting between conductors of themselves and others in storage, JP 63250050 relates to form an electrical conductive coating film extending from the adhesion part of a sheet-type terminal board with a large flat size and a frame-type sealing body toward external edge of the sheet-type terminal board.

EP 0679002 A2 mainly relates to the SIM card in the mobile phone, which is an IC card rather than a battery, wherein the card reading configuration in a mobile phone includes a space in the housing for the SIM card, and the space is covered by the battery unit. The battery unit in EP 0679002 A2, however, is arranged in a common manner but not a specific manner.

US 5124508 relates to a method of constructing an electronic circuit. The disclosed method includes steps of providing a sheet battery having a power layer and a ground layer with their outer surfaces covered by an insulating layer to serve as an electronic circuit substrate, and then placing an electronic circuitry directly on an outer surface of the sheet battery. More specifically, the main feature of US 5124508 is the battery material for the circuit board substrate.

US 5824431 mainly relates to the locking system of two battery units in a device.

All listed disadvantages are obstacles to popularize portable information appliances. The present invention provides solutions with an entirely shifted paradigm.

### SUMMARY OF THE INVENTION

It is an object of the present invention to provide a battery power system for an electrical apparatus, which is simple to use and can safeguard maintaining power continuity.

This object is solved by a battery card assembly according to claim 1. The dependent claims are directed to advantageous embodiments of the invention.

In accordance with the present invention, a battery card assembly is provided. The battery card assembly is adapted to be used with an electrical apparatus to be power-supplied by one of a plurality of battery cards contained in the battery card assembly. The battery assembly includes an assembly body electrically connected to the electrical apparatus and has a plurality of card slits for respectively replaceably inserting therein the plurality of battery cards. In addition, the battery card assembly includes a control circuit for selecting one of the plurality of battery cards to be active.

With the present invention, it is possible to provide standardized battery packs in light, thin, safe, and user-friendly card configuration to make interchangeability between appliances easy and possible.

It is still possible to provide a battery power system that provides non-interruptible energy by easy swapping battery packs in user-friendly formats so that the user can change their battery packs without turning off the electrical apparatus when the battery pack runs short of capacity. Therefore, the improved battery power system enables a user to solve the shorter run time dilemma, as portability requires battery packs continue to shrink. Instead of adding more power to appliance, the present invention brings a different pattern using battery cards to provide a minimum run time that satisfies general applications whereas the system upholds power continuity.

It is further possible to provide a safe battery power system, by which issues of public safety can be minimized without adding any inconvenience to mobile users when battery cards are charged on a separate charger outside the appliance or a charger built-in the appliance.

It is further possible to provide an improved battery power system, which enables the user to carry no more power than they actually need and no longer worry losing data when battery power exhausts.

It is further possible to provide a battery pack having a safety design to prevent from shortage due to mishandling when the battery pack is not in use.

It is further possible to provide a battery pack having higher weight and volume energy density than that of conventional battery packs.

Preferably, the electronical apparatus has a casing having a slot for mounting therein the battery card assembly, and wherein the assembly body is insertable into said slot of said electronical apparatus.

Preferably, the battery card assembly has a retaining mechanism mounted in the assembly body for keeping each of the plurality of battery cards in the respective card slit for power-supplying the electrical apparatus in a first instance and disengaging the battery card from the card slit out of the assembly body in a second instance.

Preferably, the retaining mechanism includes an actuating button which protrudes beyond the casing in the first instance and generally remains flush with the casing in the second instance.

Preferably, each of the plurality of battery cards has two power contacts, the assembly card includes a power receiving medium for being electrically connected to the two power contacts for receiving therethrough a power from the respective battery card, the power receiving medium includes two conductors for respectively being electrically connected to the two power contacts, and the assembly body further includes a power cord electrically connected to the two conductors and having a terminal connector.

Preferably, the battery card assembly further has a guiding mechanism for guiding each of the plurality of battery cards to be inserted into the respective card slit, wherein the guiding mechanism for each of the card slits includes two opposite guiding side rails mounted in the assembly body, a moveable door for closing the respective card slit, and an elastic member for always closing the movable door against the card slit.

Preferably, the plurality of battery cards are of the same or different dimensions, and the card slits are of the same size or different sizes.

Preferably, the control circuit includes diode switches, charge/protection circuit, fuel gauge circuit, and LED display circuit, a capacity detector for detecting how much capacity the plurality of battery cards keep, a power shortage warner which will signal when either one of the plurality of battery cards nearly runs short of capacity, and a display electrically connected to the power shortage warner for showing that the one battery card nearly runs short of capacity.

The present invention provides a battery card which is adapted to be used with an electrical apparatus to be power-supplied by the battery card. The battery card can contain several power-supplying cells (at least one power-supplying cell) in series and/or in parallel arrangement, making the desired capacity and voltage to operate the electrical apparatus. The first power-supplying cell arranged in the battery card can include two first planar attaching media respectively attaching thereto a first cathode material and a first anode material, and a first planar separator separating the first attaching media on the one hand and communicating the two first attaching media with each other on the other hand. The second power-supplying cell arranged in the battery card can also include two second planar attaching media respectively attaching thereto a second cathode material and a second anode material, and a second planar separator separating the second attaching media on the one hand and communicating the second attaching media with each other on the other hand. There can be provided a housing for the first and the second power-supplying cells to form the battery card having a weight energy density larger than 40 watt-hours/kilograms and a volume energy density larger than 100 watt-hours/liter. In addition, two contacts can be mounted on the housing and respectively electrically connected to the first and the second power-supplying cells for power-supplying the electrical apparatus therethrough.

In accordance with one aspect of the present invention, the battery card preferably has a weight energy density larger than 80 watt-hours/kilograms and a volume energy density larger than 200 watt-hours/liter.

Preferably the electrical apparatus is a portable information appliance.

Preferably the housing has a major square plane, and more preferably the plane has either one of sides thereof shorter than 10cm.

Alternatively, the housing is substantially a parallelepiped having a thickness smaller than 1.5cm, and preferably less than 1cm. Preferably the parallelepiped has either one of sides thereof smaller than 15cm.

Preferably the battery card is rechargeable, and more preferably the battery card is rechargeable in the electrical apparatus or through an external charger.

In accordance with another aspect of the present invention, the battery card further electrically connects therein a protection circuit for safeguarding the battery card from working at a voltage greater or lower than a specific value.

In accordance with another aspect of the present invention, the battery card further electrically connects therein a fuel gauge for showing how much capacity said battery card keeps.

In accordance with another aspect of the present invention, the battery card further electrically connects therein a capacity display for displaying a capacity of the battery card.

Preferably the housing is made of one of ABS (Acrylonitrile-Butadiene-Styrene resin) and manganese-aluminum alloy.

In accordance with another aspect of the present invention, the battery card further includes 7 power-supplying cells wherein the 9 power-supplying cells are divided into 3 parallelly connected groups each of which includes 3 serially connected power-supplying cells.

In accordance with another aspect of the present invention, the battery card further electrically connects therein a recharging circuit for enabling the battery card to be recharged thereby.

Preferably two contacts are shielded from exposure until inserted into the electrical apparatus.

Certainly, two first planar attaching media and two second planar attaching media are rigid.

In according with another aspect of the present invention, the battery card further includes a first casing housing therein the first power-supplying cell, and a second casing housing therein the second power-supplying cell electrically connected to the first power-supplying cell in series.

It is further another object of the present invention to provide a battery card adapted to be used with an electrical apparatus to be power-supplied by the battery card. The battery card contains several power-supplying cells (at least one power-supplying cell) in series and/or in parallel arrangement, making the desired capacity and voltage to operate the electrical apparatus. The first power-supplying cell arranged in the battery card includes two first attaching media respectively attaching thereto a first cathode material and a first anode material a first separator separating the first attaching media on the one hand and communicating the two first attaching media with each other on the other hand, and a first casing housing therein the first power-supplying cell. The second power-supplying cell arranged in the battery card also includes two second attaching media respectively attaching thereto a second cathode material and a second anode material, a second separator separating the second attaching media on the one hand and communicating the second attaching media with each other on the other hand, and a second casing housing therein the second power-supplying cell. There is a housing having a thickness smaller than 1.5cm and housing therein the first and the second casings to form the battery card having a weight energy density larger than 40 watt-hours/kilograms and a volume energy density larger than 100 watt-hours/liter. In addition, there are two contacts mounted on the housing and respectively electrically connected to the first and the second power-supplying cells for power-supplying the electrical apparatus therethrough.

Preferably the attaching media and the separators are windable into being cylindrically shaped. Alternatively, the attaching media and the separators are windable into being prismatically shaped.

Preferably the housing is substantially a parallelepiped having a dimension smaller than 15cm, and more preferably smaller than 10cm.

Preferably the first and second power-supplying cells are electrically connected in series.

Preferably the thickness of the battery card is smaller than 1 cm.

Preferably the battery card has an overall weight smaller than 180g, and more preferably smaller than 150g.

Certainly, the attaching media respectively attach on two opposite side surfaces thereof the cathode material and the anode material.

It is yet another object of the present invention to provide a battery card assembly which is adapted to be used with an electrical apparatus to be power-supplied by a battery card contained in the battery card assembly. According to the present invention, the electrical apparatus has a casing having a slot for mounting therein the battery card assembly. The battery card assembly includes an assembly body insertable into the slot of the electrical apparatus and having a card slit for replaceably inserting therein the battery card, and a retaining mechanism mounted in the assembly body for keeping the battery card in the card slit for power-supplying the electrical apparatus in a first instance and disengaging the battery card from the card slit out of the assembly body in a second instance.

In accordance with one aspect of the present invention, the battery card assembly further includes a guiding mechanism for guiding the battery card to be inserted into the card slit. Preferably the guiding mechanism includes two opposite guiding side rails mounted in the assembly body.

In accordance with another aspect of the present invention, the battery card assembly further includes a movable door for closing the card slit, and an elastic member for always closing the movable door against the card slit.

Preferably the retaining mechanism includes an actuating button which protrudes beyond the casing in the first instance and generally remains flush with the casing in the second instance.

Certainly, the battery card has two power contacts and the assembly body includes a power receiving medium being electrically connected to the two power contacts of the battery card for receiving therethrough a power from the battery card. Preferably the power receiving medium includes two conductors for respectively being electrically connected to the two power contacts of the battery card, and the assembly body includes a power cord electrically connected to the two conductors and having a terminal connector.

Preferably the assembly body further includes another card slit for inserting therein another battery card.

Preferably the battery cards are of the same dimension. Alternatively, the battery cards are of different dimensions.

Preferably the card slits are of the same size. Alternatively, the card slits are of different sizes.

In accordance with another aspect of the present invention, the battery card assembly electrically connects therein a control circuit controlling from which battery card the electrical apparatus should be power-supplied.

Preferably the control circuit includes diode switches, charger/protection circuit, fuel gauge circuit, and LED display circuit.

Preferably the battery card assembly electrically connects therein a capacity detector for detecting how much capacity the battery cards keep.

In accordance with another aspect of the present invention, the battery card assembly further electrically connects therein a power shortage warner which will signal when either one of the battery cards nearly runs short of capacity.

In accordance with another aspect of the present invention, the battery card assembly further includes a display electrically connected to the power shortage warner for showing that one battery card nearly runs short of capacity.

It is still further another object of the present invention to provide a battery card assembly adapted to be used with an electrical apparatus to be power-supplied by a battery card contained in the battery card assembly. The battery card assembly includes an assembly body electrically connected to the electrical apparatus and having a card slit for replaceably inserting therein the battery card, and a retaining mechanism mounted in the assembly body for keeping the battery card in the card slit for power-supplying the electrical apparatus in a first instance and disengaging the battery card from the card slit out of the assembly body in a second instance.

It is still further another object of the present invention to provide a battery card assembly adapted to be used with an electrical apparatus, in which the electrical apparatus has a casing having a slot for mounting therein the battery card assembly, to be power-supplied by a battery card contained in the battery card assembly. The battery card assembly includes an assembly body insertable into the slot of the electrical apparatus and having a card slit for replaceably inserting therein the battery card.

In accordance with one aspect of the present invention, the battery card preferably has a weight energy density larger than 40 watt-hours/kilograms and a volume energy density larger than 100 watt-hours/liter. More preferably, the battery card has the weight energy density larger than 80 watt-hours/kilograms and the volume energy density larger than 200 watt-hours/liter.

Preferably the battery card has a thickness smaller than 1.5cm, and more preferably smaller than 1cm.

It is still further another object of the present invention to provide a battery card assembly adapted to be used with an electrical apparatus to be power-supplied by a battery card contained in the battery card assembly. The battery card assembly includes an assembly body electrically connected to the electrical apparatus and having a card slit for replaceably inserting therein the battery card.

It is still further another object of the present invention to provide an electrical apparatus having a casing having a slot for mounting therein a battery card assembly having an assembly body having a card slit for replaceably inserting therein a battery card for power-supplying the electrical apparatus.

In accordance with one aspect of the present invention, the battery card preferably has a weight energy density larger than 40 watt-hours/kilograms and a volume energy density larger than 100 watt-hours/liter, and more preferably the battery card has a weight energy density larger than 80 watt-hours/kilograms and a volume energy density larger than 200 watt-hours/liter.

Preferably the battery card has a thickness smaller than 1.5cm, and more preferably smaller than 1 cm.

Preferably battery card is substantially a parallelepiped having a dimension smaller than 15cm, and more preferably smaller than 10cm.

It is still further another object of the present invention to provide an electrical apparatus includes a casing having a card slit, and a battery card replaceably insertable into the card slit for power-supplying the electrical apparatus. The battery card includes two first planar attaching media respectively attaching thereto a first cathode material and a first anode material, a first planar separator separating the first attaching media on the one hand and communicating the two first attaching media with each other on the other hand to form a first power-supplying cell, two second planar attaching media respectively attaching thereto a second cathode material and a second anode material, a second planar separator separating the second attaching media on the one hand and communicating the second attaching media with each other on the other hand to form a second power-supplying cell electrically connected to the first power-supplying cell in series, a housing housing therein the first and the second power-supplying cells to form the battery card having a weight energy density larger than 40 watt-hours/kilograms and a volume energy density larger than 100 watt-hours/liter, and two contacts mounted on the housing and respectively electrically connected to the first and the second power-supplying cells for power-supplying the electrical apparatus therethrough.

In accordance with one aspect of the present invention, the battery card preferably has a weight energy density larger than 80 watt-hours/kilograms and a volume energy density larger than 200 watt-hours/liter.

Preferably the housing is substantially a parallelepiped having a dimension smaller than 15cm, and more preferably smaller than 10cm.

Preferably the housing has a thickness smaller than 1.5cm, and more preferably smaller than 1 cm.

Preferably the casing of the electrical apparatus further includes a slot, and the electrical apparatus further includes a battery card assembly slidably inserted into the slot and having the card slit.

It is still further another object of the present invention to provide an electrical apparatus includes a casing having a card slit and a battery card replaceably insertable into the card slit for power-supplying the electrical apparatus. The battery card includes two first attaching media respectively attaching thereto a first cathode material and a first anode material, a first separator separating the first attaching media on the one hand and communicating the two first attaching media with each other on the other hand to form a first power-supplying cell, a first casing housing therein the first power-supplying cell, two second attaching media respectively attaching thereto a second cathode material and a second anode material, a second separator separating the second attaching media on the one hand and communicating the second attaching media with each other on the other hand to form a second power-supplying cell electrically connected to the first power-supplying cell, a second casing housing therein the second power-supplying cell, a housing having a thickness smaller than 1.5cm and housing therein the first and the second casings to form the battery card having a weight energy density larger than 40 watt-hours/kilograms and a volume energy density larger than 100 watt-hours/liter, and two contacts mounted on the housing and respectively electrically connected to the first and the second power-supplying cells for power-supplying the electrical apparatus therethrough.

Preferably the thickness of the battery card is smaller than 1 cm.

Preferably the battery card has a weight energy density larger than 80 watt-hours/kilograms and a volume energy density larger than 200 watt-hours/liter.

Preferably housing is substantially a parallelepiped having a dimension smaller than 15cm, and more preferably smaller than 10cm.

Preferably the first and second power-supplying cells are electrically connected in series.

Preferably the casing of the electrical apparatus further includes a slot, and the electrical apparatus further includes a battery card assembly slidably inserted into the slot and having the card slit.

It is still further another object of the present invention to provide an electrical apparatus includes a casing having a slot, a battery card assembly slidably insertable into the slot and having an assembly body having a card slit, and a battery card replaceably inserted into the card slit for power-supplying the electrical apparatus. The battery card has a thickness smaller than 1.5cm, a weight energy density larger than 40 watt-hours/kilograms, and a volume energy density larger than 100 watt-hours/liter.

Preferably the battery card is substantially a parallelepiped having a thickness smaller than 1cm.

Preferably the battery card has a weight energy density larger than 80 watt-hours/kilograms and a volume energy density larger than 200 watt-hours/liter.

Preferably the battery card is rechargeable and the electrical apparatus further includes a charger for recharging the battery card.

Preferably the electrical apparatus further includes a power buffer so that the power buffer will assume the work for power-supplying the electrical apparatus when the battery card runs short of capacity.

Preferably the battery card assembly further includes another card slit for replaceably inserting therein another battery card.

Preferably the electrical apparatus electrically connects thereto a power control circuit for controlling from which one of the battery cards the electrical apparatus should be power-supplied.

Preferably the battery card assembly is formed into a cartridge, and the electrical apparatus further includes a display for warning a user that one of the battery cards runs short of capacity.

The present invention may best be understood through the following descriptions with reference to the accompanying drawings, in which:

### BRIEF DESCRIPTION OF THE DRAWINGS

Fig. 1 is a cross-section view of a conventional battery cell in cylindrical structure;
Fig. 2 is a cross-section view of a conventional battery cell in prismatic structure;
Fig. 3 is a conventional battery pack for notebook computer containing cylindrical battery cells;
Fig. 4 is a conventional battery pack for notebook computer containing prismatic battery cells;
Fig. 5 is a cross-section view of a polymeric battery cell in flat shape;
Fig. 6 is a cross-section view of a preferred battery card embodiment containing several battery cells in floppy disk size;
Fig. 7 shows the battery recharging/protection circuit and the connection thereof to a battery card with a series of battery cells;
Fig. 8 shows a block diagram of fuel gauge circuit embedded in battery card;

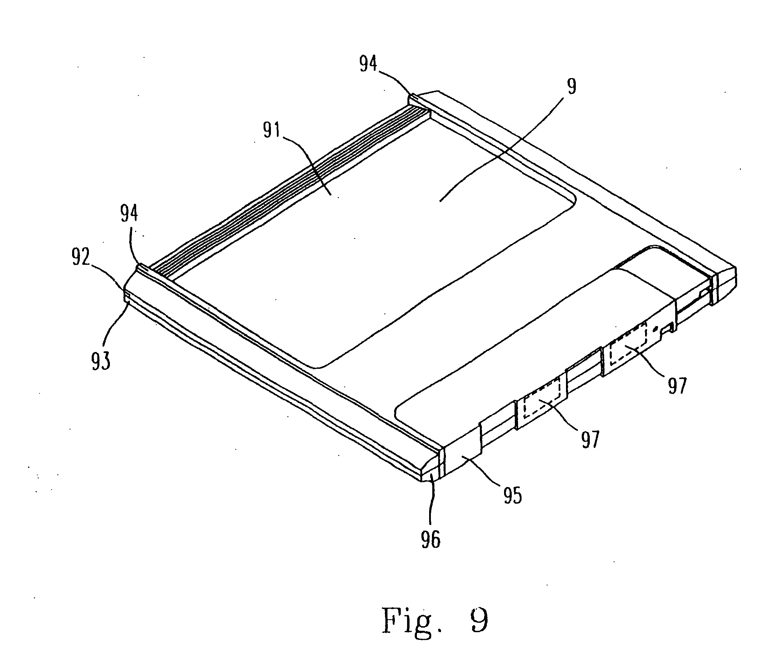

Fig. 9 shows a battery card with shutter closed when not in use;
Fig. 10 shows a battery card with shutter open when inserted into the cartridge;
Fig. 11 shows a cartridge with elastic door closed without battery card insertion;
Fig. 12 shows a cartridge with elastic door open with battery card insertion;
Fig. 13 shows a cartridge with two card slits for inserting therein two battery cards;
Fig. 14A shows a cartridge electrically connected to a notebook computer by a cable when in use;
Fig. 14B shows a cartridge directly connected to a notebook computer when in use; and
Fig. 15 shows a block diagram of the control circuit in an appliance with two battery cards.

### DETAILED DESCRIPTION OF THE PREFERRED EMBODIMENT

The present invention is a battery power supply system consisting of battery card, battery card assembly where battery card slots in, and charger where battery card gets recharged. Battery cards are designed easy to carry, to store, and to exchange. Battery card assembly is a standard component in portable information appliances that receives battery card or battery cards in fixed formats. Charger is an accessory for safely recharging multiple battery cards with state-of-the-art charging algorithm.

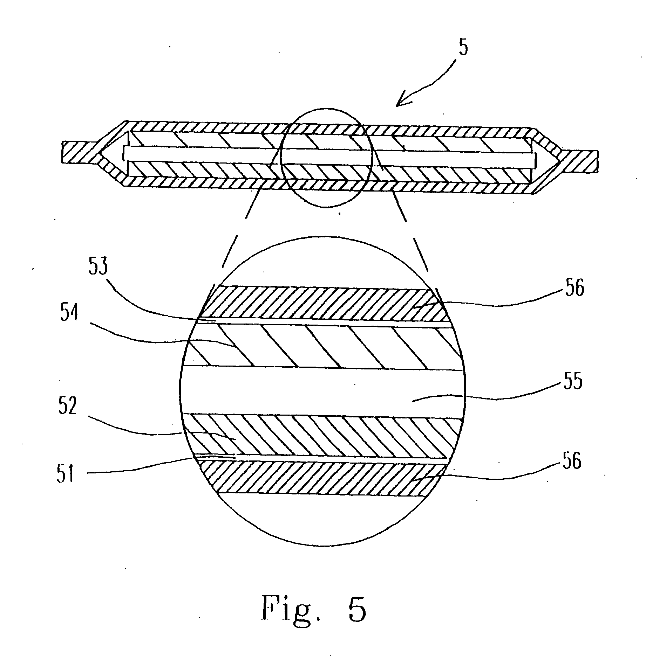

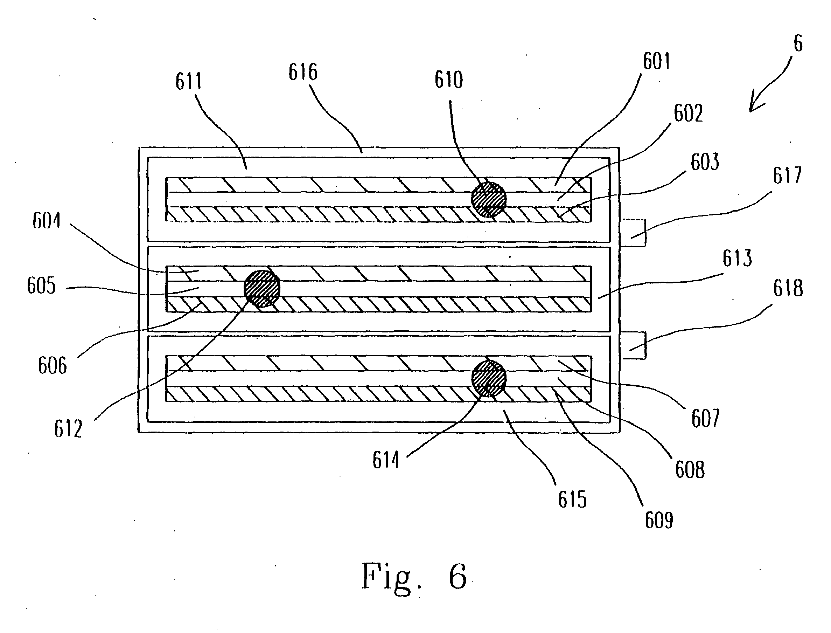

The battery card of the present invention is adapted to be used with an electrical apparatus to be power-supplied by the battery card. Preferably, the electrical apparatus is a portable information appliance. The battery card of the present invention contains several battery cells (at least one battery cell) in series and/or in parallel arrangement, making the desired capacity and voltage to operate the electrical apparatus. Battery cells arranged in the battery card can be of any configuration, cylindrical or prismatic, as long as the geometry agrees with the card dimension after cells coupling. Recently developed polymeric battery cell in flat shape is another choice of battery cell in battery card. Fig. 5 shows a cross-section view of a polymeric battery cell in flat shape. As shown in Fig. 5, attaching media 51 with anode layer 52 and attaching media 53 with cathode layer 54 are dissociated by a separator 55. Layers are laminated with a matrix of polymer materials and sealed in a flat casing 56. However, the amount of the battery cell contained in a battery card should not be limited. Fig. 6 shows a cross-section view of a preferred battery card embodiment containing several battery cells in floppy disk size. As shown in Fig. 6, the battery card 6 contains nine polymeric battery cells 601-609 in floppy disk size, each of which has a structure as that of the polymeric battery cell 5 shown in Fig. 5. The first battery cell 601 includes two first planar attaching media respectively attaching thereto the first cathode material and the first anode material, and a first planar separator separating the first attaching media on the one hand and communicating the two first attaching media with each other on the other hand. The second battery cell 602 also includes two second planar attaching media respectively attaching thereto a second cathode material and a second anode material, and a second planar separator separating the second attaching media on the one hand and communicating the second attaching media with each other on the other hand.

In Fig. 6 battery cells 601, 602, and 603 are connected in parallel, forming a group cell 610 sealed in an internal casing 611. Battery cells 604, 605, and 606 are connected in parallel, forming a group cell 612 sealed in an internal casing 613. Battery cells 607, 608, and 609 are connected in parallel, forming a group cell 614 sealed in an internal casing 615. Group cells 610, 612, and 614 are further connected in series to form a final battery card 6 sealed in a housing 616. In addition, there are two contacts (617 and 618) mounted on the housing 616 and electrically connected to battery cells 601-609 for power-supplying the electrical apparatus therethrough. Therefore, the battery card 6 can be wired to a battery card cartridge (not shown) through positive and negative terminals (617 and 618). Preferably the two contacts (617 and 618) are designed to be shielded from exposure until inserted into the electrical apparatus.

The battery card of the present invention has a weight energy density larger than 40 watt-hours/kilograms and a volume energy density larger than 100 watt-hours/liter. Preferably, the battery card has a weight engery density larger than 80 watt-hours/kilograms and a volume energy density larger than 200 watt-hours/liter.

The housing of the battery card has a major square plane. Preferably the plane has either one of sides thereof shorter than 10 cm. Alternatively, the housing of the battery card is substantially a paralleleiped having a thickness smaller than 1.5 cm, and more preferably less than 1 cm. The parallelepiped has either one of sides thereof smaller than 15 cm, preferably less than 10cm. However, the shape of the housing should not be limited. In addition, the battery card has an overall weight smaller than 180g, and preferably smaller than 130g.

The battery card of the present invention contains battery cells in a plastic and/or metal alloy housing. Housing materials are light, thin, firm, crush resistant, and good for heat dissipation. ABS (Acrylonitrile-Butadiene-Styrene resin) and magnesium-aluminum alloy are current choices.

Battery cells in the battery card of the present invention can be of any renewable battery chemistry, nickel metal hydride (NiMH), lithium-ion (Li-ion), zinc air, and/or other electrochemical system to be developed. Battery cells are coupled inside the battery card in series and/or in parallel arrangement, making desired capacity and voltage to operate the appliances.

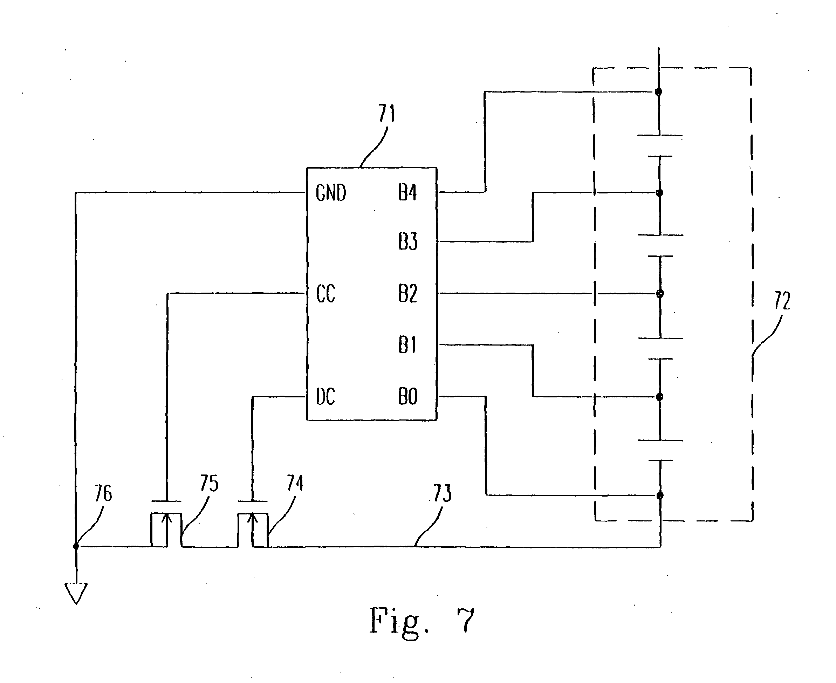

The battery card of the present invention is recharagable. The battery card electrically connects therein a recharging circuit for enabling the battery card to be recharged thereby. Therefore, the battery card can be recharged by an independent charger outside the appliance, by connection to charger within the electrical apparatus, or by connection to wall power jack for direct charge from AC power supply. In addition, the battery card contains protection circuit for safeguarding the battery card from working at a voltage greater or lower than a specific value (i.e. prevent battery cells from being overcharged and/or over discharged). Fig. 7 shows a block diagram of a battery recharging/protection circuit 71 connected to a battery card 72 containing four battery cells in series. Inputs (B4, B3, B2, and B1) in the recharging/protection circuit 71 are connected to corresponding positive terminals of battery cells in battery card 72. Input B0 is connected to the negative terminal 73 of the battery card 72. A selector (not shown) in the recharging/protection circuit 71 is able to select combination of B0-B4 to examine voltage of any individual battery cell in the battery card 72. The negative terminal 73 is connected to transistors 74 and 75, then to ground terminal 76. Ground terminal 76 connects to the GND input in the recharging/protection circuit 71. The gate of transistor 74 is connected to the DC output, associated with a discharge operation, of the recharging/protection device 71. The gate of transistor 75 is connected to the CC output, associated with a charging operation, of the recharging/protection circuit 71.

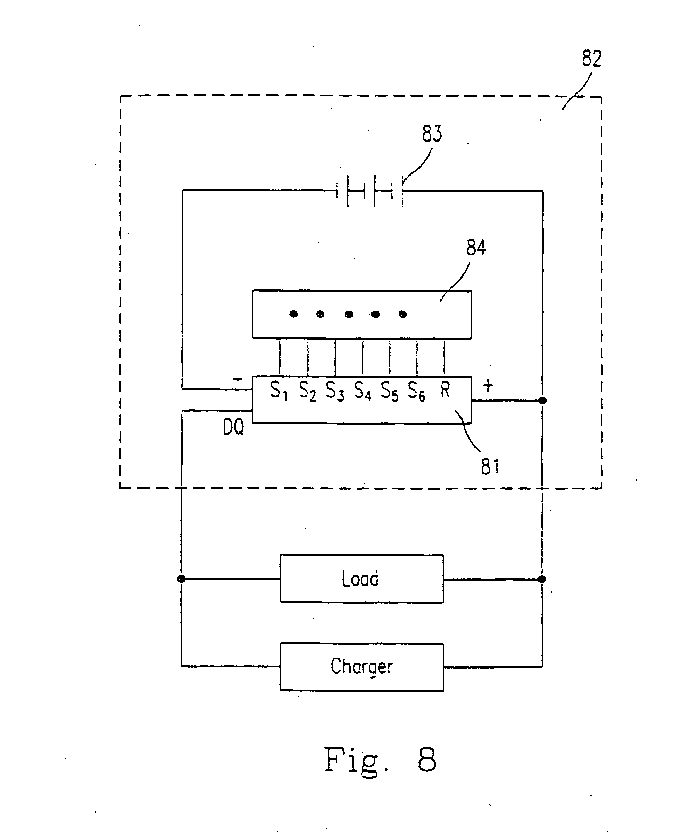

Battery cards of the present invention are embedded with a fuel gauge circuit for detecting battery capacity and showing how much capacity the battery card keeps. The battery card includes a capacity display for displaying the capacity of the battery card. Fig. 8 shows a block diagram of the fuel gauge connection, wherein fuel gauge circuit 81 is embedded in the battery card 82. The fuel gauge circuit 81 is connected to battery cells 83 and the serial communication port (DQ). The fuel gauge circuit 81 contains light emitting diode array 84 that displays detected information. In demonstration there are five segments of display connected to six terminals and a common output.

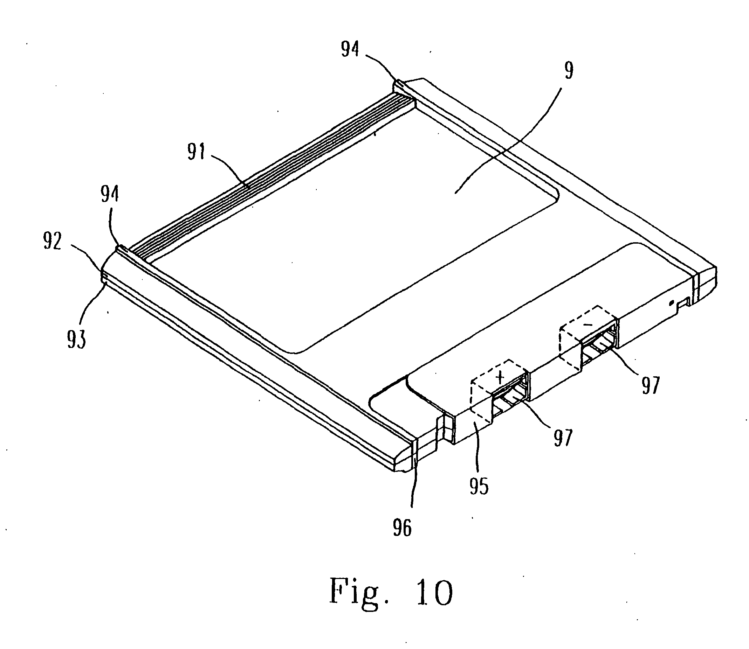

Fig: 9 shows a basic design of the battery card. The battery card 9 includes a housing 91 made of upper shell 92 and lower shell 93. Along the surface there are tracking rails 94 that match the battery card to a cartridge (not shown) where the battery card solts in. A shutter 95 is provided on the front peripheral edge 96 of the housing 91 to cover the access 97, which contains "+" and "-" power outputs, when not in use. Fig. 10 shows when battery card 9 is inserted into the cartridge, the shutter 95 moves to the other side exposing the access 97, which contains "+'' and "-" power outputs, to cartridge terminal.

### EMBODIMENTS OF BATTERY CARD

### 1. A battery card made of cylindrical battery cells (less preferred)

A battery card consists of three cylindrical Li-ion battery cells coupled in series. Each battery cell operates at 3.6V with a full capacity of 1.35Ah. Battery cell sizes 18mm in diameter, 65mm in height, and weighs 42g. The battery card sizes 54(W) x 65(L) x 18(T) mm, and weighs 126g before circuit and case finish. The battery card delivers 14.6Wh (10.8V x 1.35Ah), good for operating a Pentium 300 notebook computer for 60 minutes.

### 2. A battery card made of prismatic battery cells (less preferred)

A battery card consists of three prismatic Li-ion battery cells coupled in series. Each battery cell operates at 3.6V with a full capacity of 0.96Ah. Battery cell sizes 34(W) x 48(L) x 9(T) mm, and weighs 40g. The battery card sizes 102(W) x 48(L) x 9(T) mm, and weighs 120g before circuit and case finish. The battery card delivers 10.3 Wh (10.8V x 0.95Ah), good for operating a Pentium 300 notebook computer for 42 minutes.

### 3. A battery card made of credit card size polymeric battery cells (more preferred)

A battery card in credit card size consists of four polymeric Li-ion battery cells in parallel. Each battery cell operates at 3.6V with a full capacity of 0.3Ah. Battery cell sizes 85(W) x 55(L) x 0.75(T) mm, and weighs 9g. The battery card sizes 85(W) x 55(L) x 3.2(T) mm, and weighs 36g before circuit and case finish. The battery card delivers 4.32Wh (3.6V × 1.2Ah), good for operating a GSM cellular handset longer than 40 hours of talk time and/or 150 hours of standby.

### 4. A battery card made of floppy disk size polymeric battery cells (more preferred)

A battery card in floppy disk size consists of nine polymeric Li-ion battery cells, three in series and three in parallel. Each battery cell operates at 3.6V with a full capacity of 0.3Ah. Battery cell sizes 90(W) x 90(L) x 0.75(T) mm, and weighs 15g. The battery card sizes 90(W) x 90(L) x 7.4(T) mm, and weighs 135g before circuit and case finish. The battery card delivers 16.2Wh (10.8V x 1.5Ah), good for operating a Pentium 300 notebook computer for 66 minutes.

### 5. A battery card made of A4 size polymeric battery cells (more preferred)

A battery card in A4 size consists of three polymeric Li-ion battery cells in series. Each battery cell operates at 3.6V with a full capacity of 3.7 Ah. Battery cell sizes 280(W) x 210(L) x 0.75(T) mm, and weighs 110g. The battery card sizes 280(W) x 210(L) x 2.4(T) mm, and weighs 330g before circuit and case finish. The battery card delivers 40Wh (10.8V × 3.7Ah), good for operating a Pentium 300 notebook computer for 163 minutes.

The battery card assembly of the present invention is adapted to be used with an electrical apparatus, in which the electrical apparatus has a casing having a slot for mounting therein the battery card assembly, to be power-supplied by a battery card contained in the battery card assembly.

The battery card assembly includes an assembly body insertable into the slot of the electrical apparatus and having a card slit for replaceably inserting therein the battery card, and a retaining mechanism mounted in the assembly body for keeping the battery card in the card slit for power-supplying the electrical apparatus in a first instance and disengaging the battery card from the card slit out of the assembly body in a second instance.

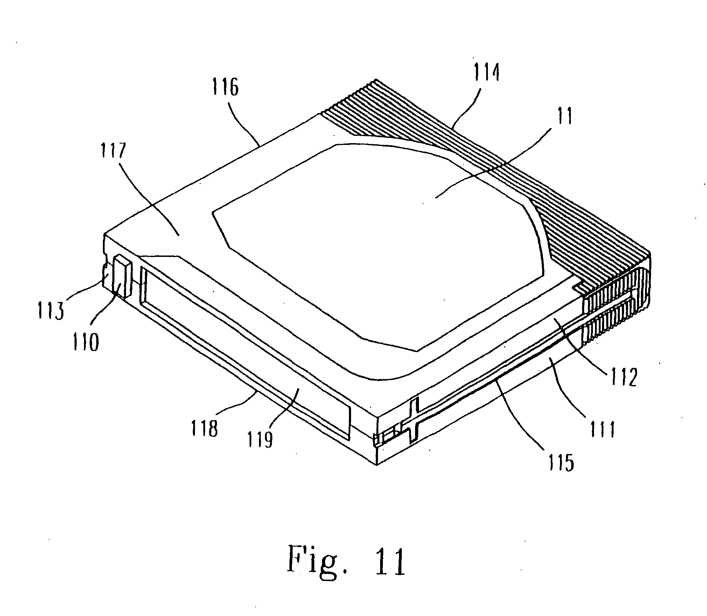

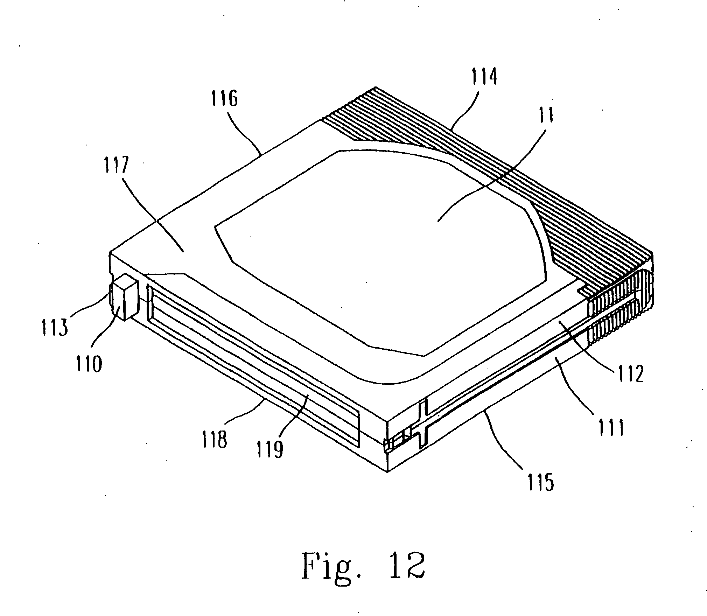

Battery card assembly is the host inside the electrical apparatus that receives one battery card or multiple battery cards. Battery card assembly can be fonned into a PC card cartridge when battery cards designed in PCMCIA specification. Fig. 11 shows a schematic diagram of a cartridge according to the present invention. Battery cartridge 11, if independently designed, has a bottom half shell 111 and a top half shell 112 joined together. The cartridge 11 has front 113, back 114, side surfaces 115, 116, and substantially planar surfaces on the top 117 and in the bottom 118. In addition, the cartridge 11 further includes a guiding mechanism (not shown) for guiding the battery card to be inserted into the card slit. The guiding mechanism of the cartridge 11 includes two opposite guiding side rails (not shown) mounted in the assemly body. Moreover, the cartridge 11 includes a moveable door 119 for enclosing the card slit, and an elastic member (not shown) for always closing the moveable door against the card slit. In Fig. 11, the movable door 119 closes and the actuating button 110 is down when there is no battery card in the cartridge 11. In Fig. 12, the movable door 119 opens with an up actuating button 110 when battery card inserts. When the user wants to change the battery card, he can simply push actuating button 110 down to open moveable door 119 to release battery card. In addition, the cartridge 11 includes two conductors (not shown) being electrically.connected to the two power contacts of the battery card for receiving therethrough a power from the battery card when the battery card solts in. The cartridge 11 further includes a power cord (not shown) electrically connected to the two conductors and having a terminal connector (not shown).

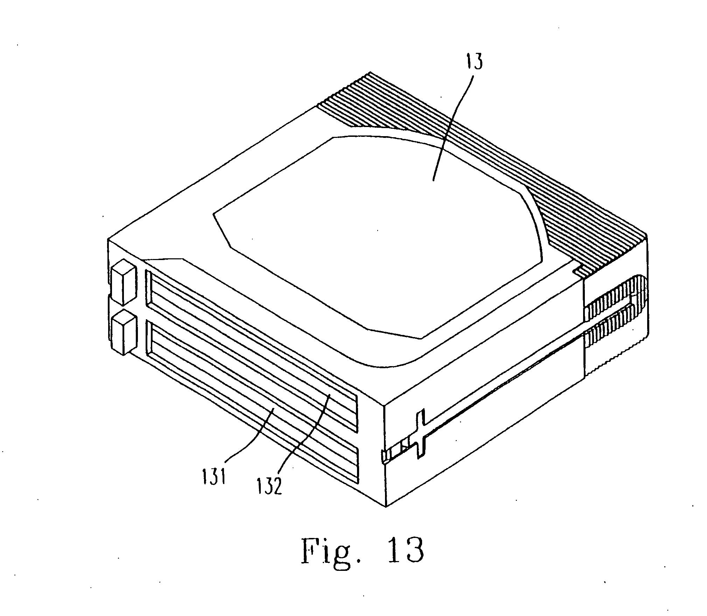

Alternatively, the cartridge can be designed to have another card slit for inserting therein another battery card. Fig. 13 shows a cartridge 13 with two card slits (131 and 132) for inserting therein two battery cards. Certainly, those card slits (131 and 132) can be designed to have same size or different sizes. Correspondingly, the battery card can be of the same dimension or different dimensions.

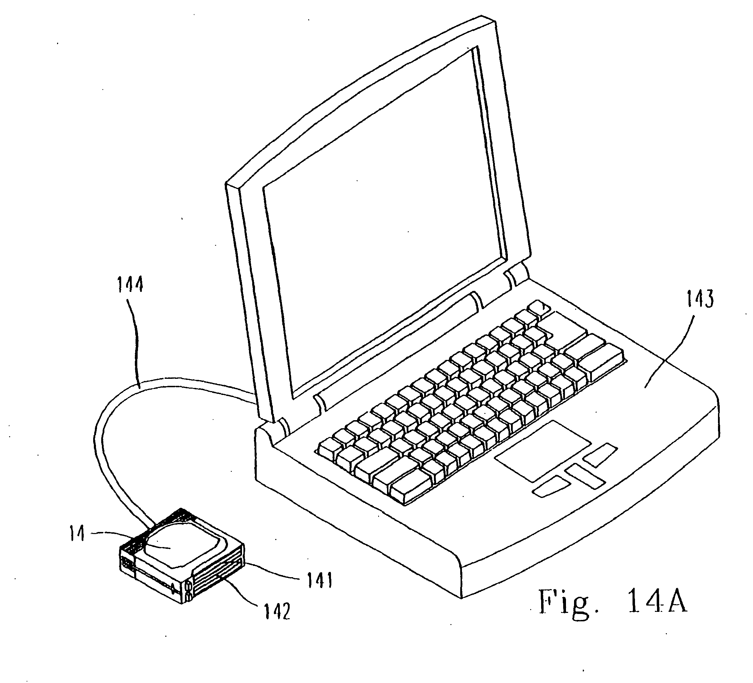

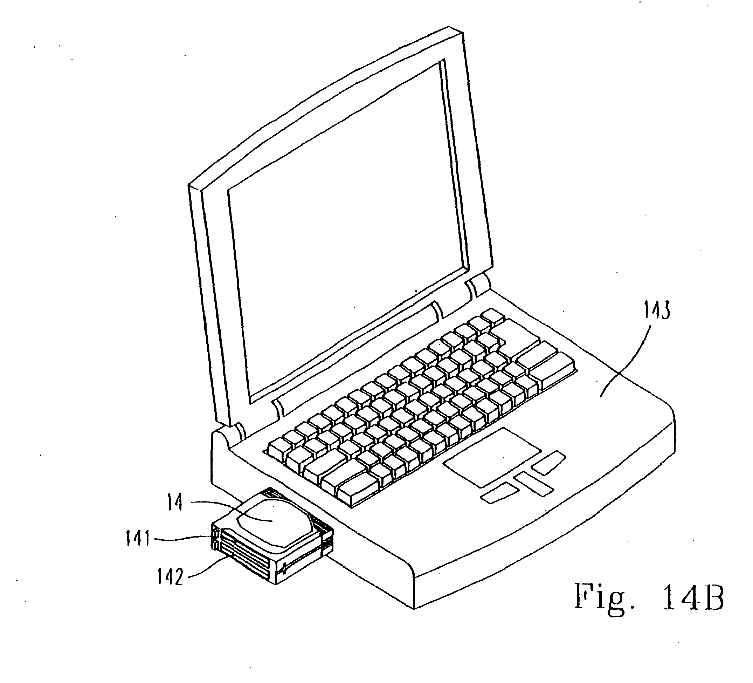

Certainly, in another embodiment, the battery card assembly can be an independent cartridge outside the electrical apparatus. As shown in Fig. 14A, the cartridge 14 with two card slits (141 and 142) can be electrically connected to the notebook computer 143 by a cable 144 when in use. Alternatively, the cartridge 14 with two card slits (141 and 142) can be directly connected to the notebook computer 143 as shown in Fig. 14B.

In the case of using single battery card, the cartridge electrically connects to a power buffer (not shown) in the electrical apparatus when the battery card runs short of the capacity. Changing power connection between the battery card and the power buffer, i.e., a bridge battery and/or a capacitor, by a diode switch, the user can change their battery card at a certain time interval without turning off the electrical apparatus when the battery card run short of the capacity.

In the case of using multiple battery cards, the cartridge connects power to the electrical apparatus from only one of the battery card at any given time. Until the first battery card is completely discharged, the cartridge automatically switches the first battery card to another battery card without disturbing the device operation. By changing power connection between battery cards and taking power from only one battery card at any given time, the user can change battery card without turning off the electrical apparatus when one of the battery card run short of capacity. Therefore, in both cases the appliance operation will not be interrupted when the battery card is run short of the capacity. In addition, the battery card assembly can be designed to electrically connect therein a capacity detector for detecting how much capacity the battery cards keep, and a power shortage warner which will signal when either one of the battery card nearly runs short of capacity. Certainly, battery card assembly can also be designed to have a display electrically connected to the power shortage warner for warning a user that one of the battery cards runs short of capacity.

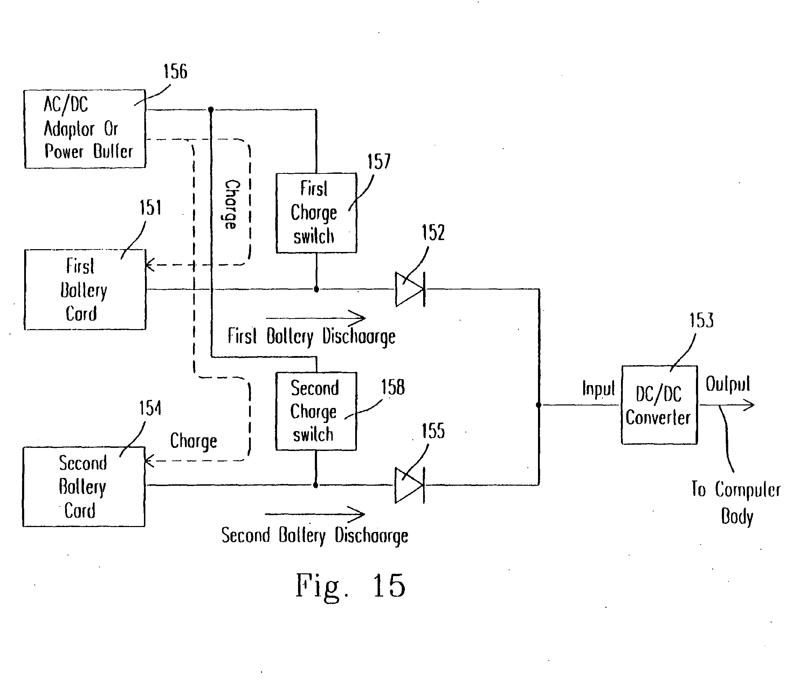

Fig. 15 shows a block diagram of a control circuit in an appliance with two battery cards. A first battery card 151 is connected via a diode 152, which is positioned in the forward direction, to the input terminal of a DC/DC converter 153 that supplies power to the computer. A second battery card 154 is connected to the input terminal of the DC/DC converter 153 via a diode 155, which is also positioned in the forward direction. The first battery card 151 and the second battery card 154 are OR-connected via the diode 152 and diode 155 to the DC/DC converter 153. Power from either the first battery card 151 or the second battery card 154 is supplied to the computer via the diode 152 or the diode 155 and the DC/DC converter 153.

An AC/DC adapter 156, which can also be the power buffer, is connected between the first battery card 151 and the diode 152 through a first charge switch 157, and is further connected between the second battery card 154 and the diode 155 through a second charge switch 158. The AC/DC adapter or the power buffer 156 provides charging routes in addition to a power supply route to the appliance via the DC/DC converter 153. Either the first battery card 151 or the second battery card 154 is charged along the charging routes, and power can be supplied to appliance via either the diode 152 or the diode 155 and DC/DC converter 153.

### EMBODIMENTS OF BATTERY CARD ASSEMBLY

### 1. A cartridge containing one battery card

A cartridge containing one battery card is designed for being mounted in a slim and compact appliances. A diode switch connects to a power buffer, i.e., a bridge battery and/or a capacitor, when the battery card is disconnected from the cartridge. Users are able to change their battery card without turning off the machine within a certain period of time.

### 2. A cartridge containing more than one battery card

A cartridge containing more than one battery card is designed for full function appliances. A diode switch connects to only one of the battery card at any given time. While user extracts the low-capacity battery card out of the cartridge, the cartridge switches to another battery card without disturbing the operation. User can insert a new battery card with full capacity anytime before the second battery card exhausts. However, number of battery card able to be installed in the cartridge should not be limited.

This invention introduces a new battery power system that operates by battery packs in light, thin, safe, and user-friendly card configuration. As portability requires battery packs continue to shrink, solution to the shorter run time dilemma is to design a power system that provides non-interruptible energy by easy swapping unit battery packs in user-friendly formats.

Instead of adding more power to appliance, the present invention brings a different pattern using battery cards to provide a minimum run time that satisfies general applications whereas the system upholds power continuity. When battery cards are charged on a separate charger outside the appliance, issue of public safety can be minimized without adding any inconvenience to mobile users.

With the present invention users carry no more power than they actually need. They no longer worry losing data when battery power exhausts. Furthermore, battery packs in card shape can be standardized that makes interchangeability between appliances easy and possible

According to the description with reference to the accompanying drawings, we can see that battery power system of the present invention improves the defect encountered by the prior arts.

While the invention has been described in terms of what are presently considered to be the most practical and preferred embodiments, it is to be understood that the invention need not be limited to the disclosed embodiment. On the contrary, it is intended to cover various modifications and similar arrangements included within the spirit and scope of the appended claims which are to be accorded with the broadest interpretation so as to encompass all such modifications and similar structures. Therefore, the above description and illustration should not be taken as limiting the scope of the present invention which is defined by the appended claims.

## Claims

1. A battery card assembly adapted to be used with an electrical apparatus (143) to be power-supplied by one of a plurality of battery cards (6, 9, 151, 154) contained in said battery card assembly comprising:
- an assembly body (111, 112) electrically connected to said electrical apparatus (143) and having a plurality of card slits (131, 132, 141, 142) for respectively replaceably inserting therein said plurality of battery cards (6, 9, 151, 154); and
- a control circuit for selecting one of said plurality of battery cards (6, 9, 151, 154) to be active.

2. A battery card assembly according to claim 1, wherein said electrical apparatus (143) has a casing having a slot for mounting therein said battery card assembly, and wherein said assembly body (111, 112) is insertable into said slot of said electrical apparatus (143).

3. A battery card assembly according to claim 1 or 2, comprising a retaining mechanism mounted in said assembly body (111, 112) for keeping each of said battery cards (6, 9, 151, 154) in the respective card slit (131, 132, 141, 142) for power-supplying said electrical apparatus (143) in a first instance and disengaging said battery card (6, 9, 151, 154) from said card slit (131, 132, 141, 142) out of said assembly body (111, 112) in a second instance.

4. A battery card assembly according to claim 3, wherein said retaining mechanism includes an actuating button (110) which protrudes beyond said casing in said first instance and generally remains flush with said casing in said second instance.

5. A battery card assembly according to any of the preceding claims, wherein each of said battery cards (6, 9, 151, 154) has two power contacts (617, 618, 97); said assembly body (111, 112) includes a power receiving medium for being electrically connected to said two power contacts (617, 618, 97) for receiving therethrough a power from the respective battery card (6, 9, 151, 154); said power receiving medium includes two conductors for respectively being electrically connected to said two power contacts (617, 618, 97); and said assembly body (111, 112) further inlcudes a power cord electrically connected to said two conductors and having a terminal connector.

6. A battery card assembly according to any of the preceding claims, further comprising: a guiding mechanism for guiding each of said battery cards (6, 9, 151, 154) to be inserted into the respective card slit (131, 132, 141, 142), wherein said guiding mechanism for each of said card slits (131, 132, 141, 142) includes two opposite guiding side rails mounted in said assembly body (111, 112); a moveable door (119) for closing the respective card slit (131, 132, 141, 142); and an elastic member for always closing said movable door (119) against said card slit (131, 132, 141, 142).

7. A battery card assembly according to any of the preceding claims, wherein said battery cards (6, 9, 151, 154) are of the same or different dimensions, and said card slits (131, 132, 141, 142) are of the same size or different sizes.

8. A battery card assembly according to any of the preceding claims, wherein said control circuit includes diode switches, charger/protection circuit, fuel gauge circuit, and LED display circuit; a capacity detector for detecting how much capacity said battery cards (6, 9, 151, 154) keep; a power shortage warner which will signal when either one of said battery cards (6, 9, 151, 154) nearly runs short of capacity; and a display electrically connected to said power shortage warner for showing that said one battery card (6, 9, 151, 154) nearly runs short of capacity.

## Patentansprüche

1. Batteriekartenanordnung zur Verwendung bei einem elektrischen Gerät (143), welches durch eine von einer Mehrzahl von Batteriekarten (6, 9, 151, 154) mit Strom zu versorgen ist, welche in der Batteriekartenanordnung enthalten sind, umfassend:
- einen Anordnungskörper (111, 112), der elektrisch mit dem elektrischen Gerät (143) verbunden ist und eine Mehrzahl von Kartenschlitzen (131, 132, 141, 142) zum jeweiligen austauschbaren Einführen der Mehrzahl von Batteriekarten (6, 9, 151, 154) aufweist, und
- eine Steuerschaltung zum Auswählen einer aus der Mehrzahl von Batteriekarten (6, 9, 151, 154) als aktive Karte.

2. Batteriekartenanordnung nach Anspruch 1, wobei das elektrische Gerät (143) ein Gehäuse mit einem Schlitz zum Anordnen der Batteriekartenanordnung darin aufweist, und wobei der Anordnungskörper (111, 112) in den Schlitz des elektrischen Geräts (143) einführbar ist.

3. Batteriekartenanordnung nach Anspruch 1 oder 2, umfassend einen in dem Anordnungskörper (111, 112) angebrachten Rückhaltemechanismus zum jeweiligen Halten der Batteriekarten (6, 9, 151, 154) in dem jeweiligen Kartenschlitz (131, 132, 141, 142), um das elektrische Gerät (143) mit Strom zu versorgen, in einem ersten Fall, und zum Freigeben der Batteriekarte (6, 9, 151, 154) von dem Kartenschlitz (131, 132, 141, 142), aus dem Anordnungskörper (111, 112) heraus, in einem zweiten Fall.

4. Batteriekartenanordnung nach Anspruch 3, wobei der Rückhaltemechanismus einen Betätigungsknopf (110) aufweist, der in dem ersten Fall von dem Gehäuse vorsteht und in dem zweiten Fall im Wesentlichen bündig mit dem Gehäuse bleibt.

5. Batteriekartenanordnung nach einem der vorangehenden Ansprüche, wobei jede der Batteriekarten (6, 9, 151, 154) zwei Stromkontakte (617, 618, 97) aufweist, wobei der Anordnungskörper (111, 112) ein Stromaufnahmemittel aufweist, welches elektrisch mit den beiden Stromkontakten (617, 618, 97) zu verbinden ist, um damit einen Strom von der jeweiligen Batteriekarte (6, 9, 151, 154) zu empfangen, wobei das Stromaufnahmemittel zwei Leiter aufweist, die jeweils elektrisch mit den beiden Stromkontakten (617, 618, 97) zu verbinden sind, und wobei der Anordnungskörper (111, 112) ferner eine Stromleitung aufweist, die elektrisch mit den beiden Leitern verbunden ist und einen Anschlussverbinder aufweist.

6. Batteriekartenanordnung nach einem der vorangehenden Ansprüche, ferner umfassend: einen Führungsmechanismus zum Führen jeder der Batteriekarten (6, 9, 151, 154), die in den jeweiligen Kartenschlitz (131, 132, 141, 142) einzuführen sind, wobei der Führungsmechanismus für jeden der Kartenschlitze (131, 132, 141, 142) zwei gegenüberliegende, in dem Anordnungskörper (111, 112) angebrachte Führungsseitenschienen aufweist; eine bewegbare Türe (119) zum Verschließen des jeweiligen Kartenschlitzes (131, 132, 141, 142); und ein elastisches Glied zum stetigen Verschließen der bewegbaren Türe (119) gegen den Kartenschlitz (131, 132, 141, 142).

7. Batteriekartenanordnung nach einem der vorangehenden Ansprüche, wobei die Batteriekarten (6, 9, 151, 154) von gleichen oder verschiedenen Abmessungen sind, und wobei die Kartenschlitze (131, 132, 141, 142) von gleicher Größe oder von verschiedenen Größen sind.

8. Batteriekartenanordnung nach einem der vorangehenden Ansprüche, wobei die Steuereinrichtung umfasst: Diodenschalter, eine Lade/Schutz-Schaltung, eine Füllstandsmessungsschaltung und eine LED-Anzeigeschaltung; einen Kapazitätsdetektor zum Detektieren wie viel Kapazität die Batteriekarten (6, 9, 151, 154) halten; eine Stromknappheits-Warneinrichtung, die ein Signal gibt, wenn irgendeine der Batteriekarten (6, 9, 151, 154) nahezu keine Kapazität mehr besitzt; und eine elektrisch mit der Stromknappheits-Warneinrichtung verbundene Anzeige zum Anzeigen, dass eine Batteriekarte (6, 9, 151, 154) nahezu keine Kapazität mehr besitzt.

## Revendications

1. Ensemble de cartes de batteries adapté pour être utilisé avec un appareil électrique (143) pour être alimenté en électricité par l'une d'une pluralité de cartes de batteries (6, 9, 151, 154) contenues dans ledit ensemble de cartes de batteries comprenant :
- un corps d'ensemble (111, 112) connecté électriquement au dit appareil électrique (143) et ayant une pluralité de fentes de cartes (131, 132, 141, 142) pour insérer respectivement de manière amovible à l'intérieur de celles-ci ladite pluralité de cartes de batteries (6, 9, 151, 154) ; et
- un circuit de commande pour sélectionner l'une de ladite pluralité de cartes de batteries (6, 9, 151, 154) pour la rendre active.

2. Ensemble de cartes de batteries selon la revendication 1, dans lequel ledit appareil électrique (143) a un boîtier ayant un logement pour monter à l'intérieur de celui-ci ledit ensemble de cartes de batteries, et dans lequel ledit corps d'ensemble (111, 112) est insérable dans ledit logement dudit appareil électrique (143).

3. Ensemble de cartes de batteries selon la revendication 1 ou 2, comprenant un mécanisme de rétention monté dans ledit corps d'ensemble (111, 112) pour maintenir chacune desdites cartes de batteries (6, 9, 151, 154) dans ladite fente de carte respective (131, 132, 141, 142) pour alimenter en électricité ledit appareil électrique (53) dans une première instance et mettre hors prise ladite carte de batterie (6, 9, 151, 154) de ladite fente de carte (131, 132, 141, 142) dudit corps d'ensemble (111, 112) dans une seconde instance.

4. Ensemble de cartes de batteries selon la revendication 3, dans lequel ledit mécanisme de rétention comprend un bouton d'actionnement (110) qui fait saillie au-delà dudit boîtier dans ladite première instance et qui reste généralement à niveau avec ledit boîtier dans ladite seconde instance.

5. Ensemble de cartes de batteries selon l'une quelconque des revendications précédentes, dans lequel chacune desdites cartes de batteries (6, 9, 151, 154) a deux contacts d'alimentation électrique (617, 618, 97) ; ledit corps d'ensemble (111, 112) comprend un support de réception d'alimentation électrique pour être connecté électriquement aux dits deux contacts d'alimentation électrique (617, 618, 97) pour recevoir à travers ceux-ci une alimentation électrique de la carte de batterie respective (6, 9, 151, 154) ; ledit support de réception d'alimentation électrique comprend deux conducteurs pour être respectivement connectés électriquement aux dits deux contacts d'alimentation électrique (617, 618, 97) ; et ledit corps d'ensemble (111, 112) comprend en outre un cordon d'alimentation électrique connecté électriquement aux dits deux conducteurs et ayant un connecteur de bornes.

6. Ensemble de cartes de batteries selon l'une quelconque des revendications précédentes, comprenant en outre : un mécanisme de guidage pour guider chacune desdites cartes de batteries (6, 9, 151, 154) à insérer dans la fente de carte respective (131, 132, 141, 142), dans lequel ledit mécanisme de guidage pour chacune desdites fentes de cartes (131, 132, 141, 142) comprend deux rails latéraux de guidage opposés montés dans ledit corps d'ensemble (111, 112) ; une porte mobile (119) pour fermer la fente de carte respective (131, 132, 141, 142) ; et un membre élastique pour toujours fermer ladite porte mobile (119) contre ladite fente de carte (131, 132, 141, 142).

7. Ensemble de cartes de batteries selon l'une quelconque des revendications précédentes, dans lequel lesdites cartes de batteries (6, 9, 151, 154) sont de dimensions identiques ou différentes, et lesdites fentes de cartes (131, 132, 141, 142) sont de taille identique ou différente.

8. Ensemble de cartes de batteries selon l'une quelconque des revendications précédentes, dans lequel ledit circuit de commande comprend des commutateurs de diodes, un circuit de chargeur/protection, un circuit de jauge de combustible, et un circuit d'affichage de DEL ; un détecteur de capacité pour détecter la capacité restante desdites cartes de batteries (6, 9, 151, 154) ; un avertisseur de pénurie d'alimentation électrique qui signale quand l'une desdites cartes de batteries (6, 9, 151, 154) est pratiquement à court de capacité ; et un affichage électriquement connecté au dit avertisseur de pénurie d'alimentation électrique pour indiquer que ladite carte de batterie (6, 9, 151, 154) est pratiquement à court de capacité.
